(19) Europäisches Patentamt
European Patent Office
Office européen des brevets

(11) EP 3 390 072 B1

(12) **EUROPEAN PATENT SPECIFICATION**

(45) Date of publication and mention of the grant of the patent:
**01.07.2020 Bulletin 2020/27**

(21) Application number: **16819688.9**

(22) Date of filing: **16.12.2016**

(51) Int Cl.:
***B60C 1/00*** (2006.01) ***C08L 7/00*** (2006.01)

(86) International application number:
**PCT/JP2016/087483**

(87) International publication number:
**WO 2017/104781 (22.06.2017 Gazette 2017/25)**

(54) **A TIRE COMPRISING A TREAD**

REIFEN MIT EINER LAUFFLÄCHE

PNEU COMPRENANT UNE BANDE DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2015 PCT/JP2015/086151**

(43) Date of publication of application:
**24.10.2018 Bulletin 2018/43**

(73) Proprietor: **Compagnie Générale des Etablissements Michelin**
**63000 Clermont-Ferrand (FR)**

(72) Inventors:
- **ROTY Gael**
**Tokyo 163-1073 (JP)**
- **FUKASAWA Hiroko**
**Tokyo 163-1073 (JP)**
- **WATANABE Makiko**
**Tokyo 163-1073 (JP)**

(74) Representative: **Regimbeau**
**20, rue de Chazelles**
**75847 Paris Cedex 17 (FR)**

(56) References cited:
**WO-A1-2011/073188 FR-A1- 2 966 157**
**FR-A1- 2 989 090**

- **DATABASE WPI Week 201023 Thomson Scientific, London, GB; AN 2010-D22347 XP002767952, & JP 2010 065138 A (YOKOHAMA RUBBER CO LTD) 25 March 2010 (2010-03-25)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 390 072 B1

## Description

[Technical Field]

This invention relates to tires having treads suitable for "winter tires" capable of rolling over ground surfaces covered with ice or black ice without being provided with studs (also known as studless tires), while inhibiting crown reinforcements of the tires from rusting.

It relates more particularly to treads for winter tires specifically suited to rolling under "melting ice" conditions encountered within a temperature range typically of between -5°C and 0°C.

[Background Art]

The problem in general: Within such a range, the pressure of the tires during the passage of a vehicle brings about surface melting of the ice which is covered with a thin film of water harmful to the grip of these tires.

[Citation List]

[Patent Literature]

[PTL 1]
WO2010/009850
[PTL 2]
WO2012/052331

In order to improve the grip on the melting ice, patent applications ((Patent literature 1) and (Patent literature 2)) filed by the applicants describe tires having treads comprising specific rubber compositions capable of generating an effective surface microroughness by virtues of specific microparticles and which makes it possible to improve the grip on ice of the treads and tires comprising them under melting ice conditions without being disadvantageous to the properties of reinforcement and hysteresis.

These microparticles, which protrude at the surface of the tread, perform a claw function well known without a disadvantage of being abrasive action on the surfacing of the ground surface itself and without a significantly deteriorated road behavior on a dry ground surface. Then, subsequently, after gradual expulsion from the rubber matrix, they release microcavities which act as storage volume and as channel for draining the film of water at the surface of the ice; under these conditions, the contact between the surface of the tread and the ice is no longer lubricated and the coefficient of friction is thus improved.

However, there is some risk to accelerate rust of crown reinforcements of the tires by the treads comprising the specific rubber compositions during the passage of the vehicle on winter roads where gravel and/or a road surface anti-freezing agent are spread, wherein the gravel may scratch surfaces of the treads, which may induce the water and the agent to penetrate into the crown reinforcement, which may accelerate the rust of the crown reinforcements the tires.

[Summary of Invention]

[Technical Problem]

The specific problem solved by the present invention: Now, on continuing their research, the applicants have discovered a novel and specific rubber composite structure with surfacic and internal portions forming a tread of a tire, and which makes it possible to improve the grip on ice of the tread of the tire under the melting ice condition, while inhibiting crown reinforcements of the tires from rusting.

As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element.

In the present description, unless expressly indicated otherwise, all the percentages (%) indicated are % by weight.

The abbreviation "phr" signifies parts by weight per hundred parts of elastomer or rubber (of the total of the elastomers if several elastomers are present).

Any interval of values denoted by the expression "between a and b" represents the range of values of greater than "a" and of less than "b" (ie the limits a and b excluded) Whereas any interval of values denoted by the expression "from a to b" means the range of values going from "a" to "b" (i.e. including the strict limits a and b).

In the present description, unless expressly indicated otherwise, each Tg (glass transition temperature) is measured in a known way by DSC (Differential Scanning Calorimetry) according to Standard ASTM D3418 (1999).

The expression "based on" should be understood in the present application to mean a composition comprising the mixture and/or the product of the reaction of the various constituents used, some of the constituents being able or intended to react together, at least partly, during the various manufacturing phases of the composition, in particular during the vulcanization (curing).

[Solution to Problem]

[1] A first aspect of the invention is a tire (1) having a crown (2) prolonged by two sidewalls (3), the sidewalls (3) being ended by two beads (4), a carcass reinforcement (5) passing into the crown (2) and the sidewalls (3) and being anchored in the beads (4), the crown (2) being reinforced by a crown reinforcement (6) placed circumferentially between the carcass reinforcement (5) and a tread (7) forming the crown (2), said tread (7) comprising at least two radially superposed portions (8, 9) comprising a surfacic portion (8) intended to come into contact with ground during rolling at least when the tread is new and in the cured state, the surfacic portion (8) being made of a rubber composition A, an internal portion (9) radically inner located to (and preferably adjacent to) the surfacic portion (8), the internal portion (9) being made of a rubber composition B, wherein each of the rubber compositions A and B comprises at least a diene elastomer, between 50 and 150 phr of a reinforcing filler, between 20 and 160 phr of a plasticizer, and microparticles, wherein a content noted $C_A$ of the microparticles in the rubber composition A is between 2 and 40 phr, said content $C_A$ being higher than a content noted $C_B$ of the microparticles in the rubber composition B; wherein the microparticles have a median particle size by volume, which is measured by laser diffraction methods in accordance with ISO standard 13320-1, which satisfy the following relations:

- $50\ \mu m < D50 < 150\ \mu m$;

wherein D50 is the medium particle size by volume corresponding to 50 % of a cumulative distribution obtained from the volume particle size distribution.

[Advantageous Effects of Invention]

The novel and specific rubber composite structure with surfacic and internal portions forming the tread of the tire discovered by the applicants makes it possible to improve the grip on ice of the tread of the tire under the melting ice condition, while inhibiting crown reinforcements of the tires from rusting.

Further aspects of the present invention can be as follows.

[2] The tire according to [1], wherein $C_B$ is between 0 and 80 weight % of $C_A$.
[3] The tire according to [1] or [2], wherein $C_B$ is between 1 and 10 phr.
[4] The tire according to any one of [1] to [3], wherein $C_A$ is between 3 and 30 phr.
[5] The tire according to any one of [1] to [4], wherein the microparticles have a width of a volume particle size distribution, which is measured by laser diffraction methods in accordance with ISO standard 13320-1, which satisfies the following relations:

- 0.50 < Span < 1.50;

wherein:

- Span = $(D_{90} - D_{10}) / D_{50}$; and
- $D_{10}$ and $D_{90}$ are the particle size corresponding to 10 volume % and to 90 volume %, respectively, of the cumulative particle distribution.

[6] The tire according to any one of [1] to [5], wherein the microparticles are microparticles of a water soluble sulfate of an alkali metal or an alkaline earth metal.
[7] The tire according to [6], wherein the alkali metal or the alkaline earth metal is selected from the group consisting of sodium, potassium, magnesium, calcium and mixtures thereof.
[8] The tire according to [6] or [7], wherein the water soluble sulfate is selected from the group consisting of magnesium sulfate, potassium sulfate and mixtures thereof.
[9] The tire according to any one of [6] to [8], wherein the water soluble sulfate is magnesium sulfate.
[10] The tire according to any one of [1] to [5], wherein the microparticles are hollow microparticles of at least one metal oxide or metal hydroxide.
[11] The tire according to any one of [1] to [10], wherein the diene elastomer in the rubber composition A and the rubber composition B is selected from the group consisting of natural rubber, synthetic polyisoprenes, polybutadienes, butadiene copolymers, isoprene copolymers and the mixtures thereof.
[12] The tire according to [11], wherein the diene elastomer in the rubber composition A comprises more than 50 phr of natural rubber or of synthetic polyisoprene.
[13] The tire according to [11], wherein the diene elastomer in the rubber composition A comprises more than 50 phr of polybutadiene having a content of cis-1,4 bonds of greater than 90%.
[14] The tire according to any one of [11] to [13], wherein the diene elastomer in the rubber composition B comprises more than 20 phr of butadiene copolymers.
[15] The tire according to [14], wherein the butadiene copolymers are selected from the group consisting of styrene-butadiene copolymers, styrene-butadiene isoprene copolymers and mixture thereof.
[16] The tire according to [15], wherein the butadiene copolymers are styrene-butadiene copolymers.
[17] The tire according to any one of [1] to [16], wherein the reinforcing filler is selected from the group consisting of carbon black, inorganic filler and the mixture thereof.
[18] The tire according to [17], wherein the inorganic filler is silica.
[19] The tire according to any one of [1] to [18], wherein the content of reinforcing filler in each of the rubber compositions A and B is between 60 and 120 phr.
[20] The tire according to any one of [1] to [19], wherein the plasticizer is selected from the group consisting of a liquid plasticizer, a hydrocarbon resin and the mixture thereof.
[21] The tire according to [20], wherein the liquid plasticizer is selected from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oil, mineral oils, vegetable oils, ether plasticizers, ester phosphate plasticizers, sulphonate plasticizers and the mixtures thereof.
[22] The tire according to [20], wherein the hydrocarbon resin is selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixture thereof.
[23] The tire according to any one of [1] to [22], wherein the content of the plasticizer in each of the rubber compositions A and B is between 20 and 120 phr.
[24] The tire according to any one of [1] to [23], wherein the internal portion (9) is adjacent to the surfacic portion (8).

The tires of the invention are particularly intended to equip passenger motor vehicles, including 4×4 (four-wheel drive) vehicles and SUV (Sport Utility Vehicles) vehicles, two-wheel vehicles (in particular motorcycles), and also industrial vehicles in particular selected from vans and heavy duty vehicles (i.e., underground, bus or heavy road transport vehicles (lorries, tractors, trailers), or off-road vehicles, such as agricultural vehicles or earthmoving equipment.
The invention and its advantages will be easily understood in the light of the description and implementation examples which follow.

[Brief Description of Drawings]

Other characteristics and advantages of the invention arise from the description made hereafter in reference to the annexed drawing which shows, as non-restrictive example, an embodiment of the object of the invention.
In the drawing:
[Fig. 1]
FIG. 1 shows a schematic view of a tire cross sectional view of an embodiment of the invention.

[Description of Embodiments]

The appended FIG. 1 schematically (in particular not to a specific scale) represents, in radial cross section, a tire (1) of dimension 205/55R16 according to one embodiment of the present invention.
The FIG. 1 illustrates that the tire (1) has a crown (2) prolonged by two sidewall (3), the sidewalls being ended by two beads (4), and a carcass reinforcement (5) passing into the crown (2) and the sidewalls (3) and being anchored in the beads (4) by winding around two bead wires (4a, 4b), the turn-up (5a, 5b) of the carcass reinforcement (5) being for example pointed towards the outside of the tire (1) mounted on a rim (11).
The crown (2) is reinforced by a crown reinforcement (6) placed circumferentially between the carcass reinforcement (5) and a tread (7) forming the crown (2), the crown reinforcement (6) which is at least partly textile and/ or metallic belt being formed for example from at least two superposed crossed plies reinforced by metal cords.
The tread (7) comprises a surfacic portion (8) and an internal portion (9) radially inner located to (and preferably adjacent to) the surfacic portions (8) being made of a rubber composition A which is different from a rubber composition B of which the internal portion (9) is made.
Moreover, the tread (7) comprises one or more of main grooves (10) circumferentially extending, as shown in the FIG.1, in radical direction, a thickness of the surfacic portion (8) is 1 to 8 mm, a thickness of the internal portion (9) is 1 to 6 mm, and a depth of the main grooves is about 9 mm.
Each of the rubber compositions A and B forming the tread of the tire according to the present invention has an essential characteristic of comprising at least a diene elastomer.
A "diene" elastomer (or "rubber", the two terms being considered to be synonymous) should be understood, in a known manner, to mean an (one or more is understood) elastomer resulting at least in part (i.e., a homopolymer or a copolymer) from diene monomers (monomers bearing two carbon-carbon double bonds which may or may not be conjugated).
These diene elastomers can be classified in a known way into two categories: those "essentially unsaturated" and those essentially saturated". Butyl rubbers, such as, for example copolymers of dienes and of $\alpha$ -olefins of EPDM type, come within the category of essentially saturated diene elastomers, having a content of units of diene origin which is low or very low, always less than 15% (mol %). In contrast, essentially unsaturated diene elastomer is understood to mean a diene elastomer resulting at least in part from conjugated diene monomers, having a content of units of diene origin (conjugated dienes) which is greater than 15% (mol %). In the category of "essentially unsaturated" diene elastomers, "highly unsaturated" diene elastomer is understood to mean in particular a diene elastomer having a content of units of diene origin (conjugated dienes) which is greater than 50%.
It is preferable to use at least one diene elastomer of the highly unsaturated type, in particular a diene elastomer, in the rubber compositions A and B, selected from the group consisting of polybutadienes (BR), synthetic polyisoprenes (IR), natural rubber (NR), butadiene copolymers, isoprene copolymers and the mixtures thereof. Such copolymers are more preferably selected from the group consisting of butadiene/styrene copolymers (SBR), isoprene/butadiene copolymers (BIR), isoprene/styrene copolymers (SIR), isoprene/butadiene/styrene copolymers (SBIR) and mixtures of such copolymers.
The following are preferably suitable: polybutadienes, in particular those having a content of 1,2-units of between 4% and 80% or those having a content of cis-1,4 units of greater than 80%, polyisoprenes, butadiene/styrene copolymers in particular those having a styrene content of between 5% and 50% by weight and more particularly between 20% and 40%, a content of 1,2-bonds of the butadiene part of between 4% and 65% and a content of trans-1,4 bonds of between 20% and 80%, butadiene/isoprene copolymers, in particular those having an isoprene content of between 5% and 90% by weight and a glass transition temperature of -40°C to -80°C, or isoprene/styrene copolymers, in particular those having a styrene content of between 5% and 50% by weight and a Tg of between -25°C and -50°C.
In the case of butadiene/styrene/isoprene copolymers, those having a styrene content of between 5% and 50% by weight and more particularly of between 10% and 40%, an isoprene content of between 15% and 60% by weight and more particularly between 20% and 50%, a butadiene content of between 5% and 50% by weight and more particularly of between 20% and 40%, a content of 1 ,2-units of the butadiene part of between 4% and 85%, a content of trans-1,4-units of the butadiene part of between 6% and 80%, a content of 1,2 plus 3,4-units of the isoprene part of between 5% and 70% and a content of trans-1,4-units of the isoprene part of between 10% and 50%, and more generally any

butadiene/styrene/isoprene copolymer having a Tg of between -20°C and -70°C, are suitable in particular.

According to a particularly preferred embodiment of the invention, the diene elastomer in the rubber compositions A and B is selected from the group consisting of natural rubber, synthetic polyisoprenes, polybutadienes having a content of cis-1,4 bonds of greater than 90%, butadiene/styrene copolymers and the mixtures thereof.

According to a more particular and preferred embodiment, the diene elastomer in the rubber composition A is predominantly, that is to say for more than 50 phr (it should be remembered that "phr" means parts by weight per 100 parts of elastomer), of natural rubber (NR) or a synthetic polyisoprene (IR). More preferably, the said natural rubber or synthetic polyisoprene is then used as a blend with a polybutadiene (BR) having a content of cis-1,4 bonds which is preferably greater than 90%.

According to a more particular and preferred embodiment, the diene elastomer in the rubber composition A is predominantly, that is to say for more than 50 phr, of natural rubber (NR) or a synthetic polyisoprene (IR). More preferably, the said natural rubber or synthetic polyisoprene is then used as a blend with a polybutadiene (BR) having a content of cis-1,4 bonds which is preferably greater than 90%.

According to another particular and preferred embodiment, the diene elastomer in the rubber composition A is predominantly, that is to say for more than 50 phr, a polybutadiene (BR) having a content of cis-1,4 bonds of greater than 90%. More preferably, said polybutadiene is then used as a blend with natural rubber or a synthetic polyisoprene.

According to another particular and preferred embodiment, the diene elastomer in the rubber composition A is a binary blend (mixture) of NR (or IR) and of BR, or a ternary blend of NR (or IR), BR and SBR. Preferably in the case of such blends, the composition comprises between 25 and 75 phr of NR (or IR) and between 75 and 25 phr of BR, with which may or may not be associated a third elastomer (ternary blend) at a content of less than 30 phr, in particular of less than 20 phr. This third elastomer is preferably an SBR elastomer, in particular a solution SBR ("SSBR"). More preferably still, in the case of such a blend, the composition comprises from 35 to 65 phr of NR (or IR) and from 65 to 35 phr of BR. The BR used is preferably a BR having a content of cis-1,4 bonds of greater than 90%, more preferably of greater than 95%.

According to another particular and preferred embodiment, the diene elastomer in the rubber composition B comprises more than 20 phr (notably, between 20 and 100 phr), preferably more than 40 phr (notably, between 40 and 80 phr), of butadiene copolymers. Particularly, the butadiene copolymers are selected from the group consisting of styrene-butadiene copolymers, styrene-butadiene isoprene copolymers and mixture thereof. More particularly, the butadiene copolymers are styrene-butadiene copolymers.

Synthetic elastomers other than diene elastomers, indeed even polymers other than elastomers, for example thermoplastic polymers, might be combined, in a minor amount, with the diene elastomers in the rubber compositions A and B forming the tread of the tire according to the invention.

Each of the rubber compositions A and B forming the tread of the tire according to the present invention has another essential characteristic of comprising between 50 and 150 phr of a reinforcing filler.

Use may be made of any type of reinforcing filler known for its capabilities of reinforcing a rubber composition which can be used for the manufacture of tires, for example an organic filler, such as carbon black, or a reinforcing inorganic filler, such as silica, with which a coupling agent is combined in a known way.

Such a reinforcing filler typically consists of nano particles, the mean size (by weight) of which is less than 500 nm, generally between 20 and 200 nm, in particular and preferably between 20 and 150 nm.

All carbon blacks, in particular blacks of the HAF, ISAF or SAF type, conventionally used in treads for tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks. The carbon blacks might, for example, be already incorporated in the isoprene elastomer in the form of a masterbatch (see, for example, Applications WO 97/36724 or WO 99/ 16600).

Mention may be made, as examples of organic fillers other than carbon blacks, of the functionalized polyvinyl organic fillers as described in Applications WO 2006/ 069792, WO 2006/069793, WO2008/003434 and WO2008/003435.

The term "reinforcing inorganic filler" should be understood here as meaning any inorganic or mineral filler, whatever its colour and its origin (natural or synthetic), also known as "white filler" or sometimes "clear filler" in contrast to carbon black, capable of reinforcing by itself, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, in particular silica ($SiO_2$), or of the aluminous type, in particular alumina ($Al_2O_3$), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 $m^2/g$, preferably from 30 to 400 $m^2/g$, in particular between 60 and 300 $m^2/g$. Mention will be made, as highly dispersible ("HD precipitated silicas"), for example, of the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol

8715, 8745 and 8755 silicas from Huber. Mention may be made, as examples of reinforcing aluminas, of the "Baikalox A125" or "Baikalox CR125" aluminas from Bai'kowski, the "APA-100RDX" alumina from Condea, the "Aluminoxid C" alumina from Degussa or the "AKP-G015" alumina from Sumitomo Chemicals.

Preferably, the reinforcing filler in each of the rubber compositions A and B is selected from the group consisting of carbon black, the inorganic filler and the mixture thereof. The inorganic filler is more preferably silica.

Preferably, the content of total reinforcing filler in each of the rubber compositions A and B is between 60 and 120 phr, in particular between 70 and 100 phr.

According to another specific embodiment, the reinforcing filler in the rubber composition A comprises predominantly an inorganic filler, in particular silica; in such a case, the inorganic filler, in particular silica, is present at a content preferably of greater than 70 phr, in combination or not with carbon black in a minor amount; the carbon black, when it is present, is preferably used at a content of less than 20 phr, more preferably less than 10 phr (for example between 0.1 and 10 phr).

Independently of the first aspect of the invention, namely the search for optimized grip on melting ice, the predominant use of a reinforcing inorganic filler, such as silica, is also advantageous from the viewpoint of the grip on a wet or snowy ground surface.

According to another possible embodiment of the invention, the reinforcing filler in the rubber composition B comprises a blend of carbon black and of reinforcing inorganic filler such as silica, in similar amounts; in such a case, the content of inorganic filler, in particular silica, and the content of carbon black are preferably each between 25 and 75 phr, more particularly each between 30 and 50 phr.

In order to couple the reinforcing inorganic filler to the diene elastomer, use is made, in a well-known way, of an at least bifunctional coupling agent (or bonding agent) intended to provide a satisfactory connection, of chemical and/or physical nature, between the inorganic filler (surface of its particles) and the diene elastomer. Use is made, in particular, of bifunctional organosilanes or polyorganosiloxanes.

Use is made in particular of silane polysulphides, referred to as "symmetrical" or "asymmetrical" depending on their specific structure, as described, for example, in Applications WO 03/002648 (or US 2005/016651) and WO 03/002649 (or US 2005/016650). "Symmetrical" silane polysulphides corresponding to the following general formula (I):

(I) Z - A - Sx - A - Z ,

in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem. 1]

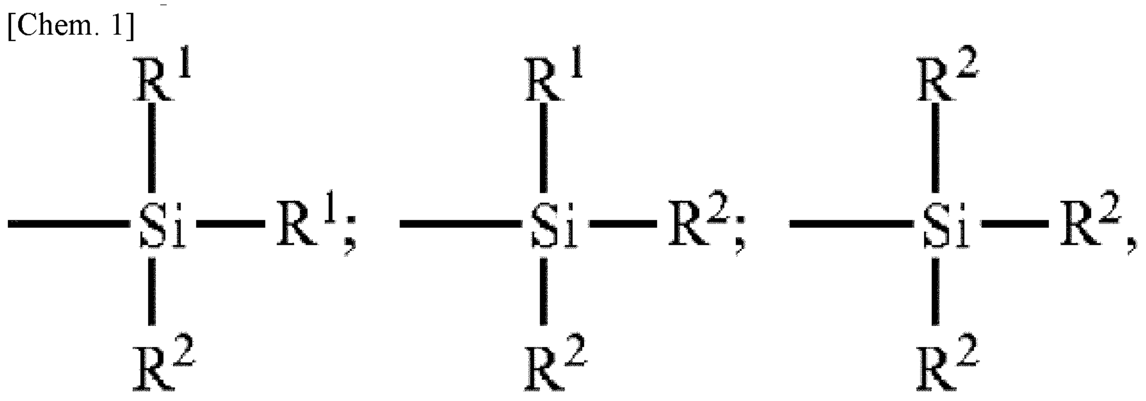

in which:

- the $R^1$ radicals, which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl and/or ethyl);
- the $R^2$ radicals, which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably still a group selected from $C_1$-$C_4$ alkoxyls, in particular methoxyl and ethoxyl),

are suitable in particular, without the above definition being limiting. Mention will more particularly be made, as examples of silane polysulphides, of bis(($C_1$-$C_4$)alkoxyl($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula $[(C_2H_5O)_3Si(CH_2)_3S_2]_2$, or bis(triethoxysilylpropyl)disulphide, abbreviated to TESPD, of formula $[(C_2H_5O)_3Si(CH_2)_3S]_2$. Mention will also be made, as preferred examples, of bis(mono($C_1$-$C_4$)alkoxyldi($C_1$-$C_4$)alkylsilylpropyl) polysulphides (in particular disulphides, trisulphides or tetrasulphides), more particularly bis(monoethoxydimethylsilylpropyl) tetrasulphide, as described in Patent Application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in Patent Applications WO 02/30939 (or US 6 774 255) and WO 02/31041 (or US 2004/051210), or of silanes or POSs carrying azodicarbonyl functional groups, such as described, for example, in Patent Applications WO 2006/125532, WO 2006/125533 and WO 2006/125534.

In the rubber compositions in accordance with the invention, the content of coupling agent in each of the rubber compositions A and B is preferably between 1 and 12 phr, more preferably between 2 and 8 phr.

A person skilled in the art will understand that a reinforcing filler of another nature, in particular organic nature, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer.

Each of the rubber compositions A and B forming the tread of the tire according to the present invention has another essential characteristic of comprising between 20 and 160 phr of a plasticizer.

The content of the plasticizer in each of the rubber compositions A and B is preferably between 20 and 120 phr. Particularly, the content of the plasticizer in the rubber composition A is between 30 and 100 phr, more particularly between 40 and 80 phr. Advantageously, the content of the plasticizer in the rubber composition B is between 20 and 80 phr, more advantageously between 20 and 40 phr. When the essential plasticizer is used in admixture with another essential plasticizer, the content should be understood to mean the total content of the two or more plasticizers.

Preferably, the plasticizer is selected from the group consisting of liquid plasticizers, (solid) hydrocarbon resins and the mixture thereof.

Liquid plasticizers are liquid at 20°C (under atmospheric pressure), their role is to soften the matrix by diluting the elastomer and the reinforcing filler; their Tg is by definition less than -20°C, preferably less than -40°C.

Any extending oil, whether of aromatic or non-aromatic nature, any liquid plasticizing agent known for its plasticizing properties with regard to diene elastomers, can be used. At ambient temperature (20°C), these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

Liquid plasticizers selected from the group consisting of polyolefinic oils, naphthenic oils (low or high viscosity, in particular hydrogenated or otherwise), paraffinic oils, DAE (Distillate Aromatic Extracts) oils, MES (Medium Extracted Solvates) oils, TDAE oils (Treated Distillate Aromatic Extracts), RAE oils (Residual Aromatic Extracts), TRAE oils (Treated Residual Aromatic Extracts), SRAE oils (Safety Residual Aromatic Extracts), mineral oils, vegetable oils, ether plasticizers, ester plasticizers (for instance phosphate plasticizers), sulphonate plasticizers and the mixtures thereof are particularly suitable.

According to a preferred embodiment, the liquid plasticizer is selected from the group consisting of MES oils, TDAE oils, naphthenic oils, vegetable oils and the mixtures thereof.

Mention may be made, as phosphate plasticizers for example, of those that contain between 12 and 30 carbon atoms, for example trioctyl phosphate. As examples of ester plasticizers, mention may especially be made of the compounds selected from the group consisting of trimellitates, pyromellitates, phthalates, 1,2-cyclohexane dicarboxylates, adipates, azelates, sebacates, triesters of glycerol, and mixtures thereof. Among the above triesters, mention may be made of glycerol triesters, preferably composed predominantly (for more than 50% by weight, more preferably for more than 80% by weight) of an unsaturated $C_{18}$ fatty acid, that is to say an unsaturated fatty acid selected from the group consisting of oleic acid, linoleic acid, linolenic acid and the mixtures thereof. More preferably, whether of synthetic origin or natural origin (in the case, for example, of sunflower or rapeseed vegetable oils), the fatty acid used is composed for more than 50% by weight, more preferably still from 80% by weight, of oleic acid. Such triesters (trioleates) comprising a high content of oleic acid are well known; for example they have been described in Application WO 02/088238, as plasticizing agents in treads for tires.

Hydrocarbon resins, which are solid plasticizers (at 20°C), exhibit a Tg of greater than +20°C, preferably greater

than +30°C, such as is described, for example in Applications WO 2005/087859, WO 2006/061064 and WO 2007/017060.

Hydrocarbon resins are polymers well known to a person skilled in the art which are essentially based on carbon and hydrogen and thus miscible by nature in diene elastomer composition(s), when they are additionally described as being "plasticizing". They have been described, for example, in the work entitled "Hydrocarbon Resins" by R. Mildenberg, M. Zander and G. Collin (New York, VCH, 1997, ISBN 3-527-28617-9), chapter 5 of which is devoted to their applications, in particular in the tire rubber field (5.5. "Rubber Tires and Mechanical Goods"). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say that they comprise only carbon and hydrogen atoms.

Preferably, the plasticizing hydrocarbon resin exhibits at least one, more preferably all, of the following characteristics:

- a Tg of greater than 20°C (more preferably between 40 and 100°C);
- a number-average molecular weight (Mn) of between 400 and 2000 g/mol (more preferably between 500 and 1500g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resin is determined by steric exclusion chromatography (SEC): solvent tetrahydrofuran; temperature 35°C; concentration 1 g/l; flow rate 1 ml/min; solution filtered through a filter with a porosity of 0.45$\mu$m before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a particularly preferred embodiment, the plasticizing hydrocarbon resin is selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixtures thereof. Use is more preferably made, among the above copolymer resins, of those selected from the group consisting of (D)CPD/ vinylaromatic copolymer resins, (D)CPD/terpene copolymer resins, (D)CPD/$C_5$ fraction copolymer resins, (D)CPD/$C_9$ fraction copolymer resins, terpene/vinylaromatic copolymer resins, terpene/phenol copolymer resins, $C_5$ fraction/vinyl-aromatic copolymer resins, $C_9$ fraction/vinylaromatic copolymer resins, and the mixtures thereof.

The term "terpene" combines here, in a known way, the $\alpha$-pinene, $\beta$-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, $\alpha$-methylstyrene, ortho-, meta- or para-methyl styrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

Each of the rubber compositions A and B forming the tread of the tire according to the present invention has the other essential characteristic of comprising microparticles.

The microparticles in the rubber compositions A and B make it possible improve the grip on ice, especially under melting ice conditions, of the tread of the tire when the tread is new, and also when tire is worn, for instance, when the internal portion (9) appears on the contact surface.

For instance, the microparticles are hollow microparticles of at least one metal oxide or metal hydroxide, microparticles of a water soluble metal salt or the mixture thereof.

For specific instance, the metal in the metal oxide or the metal hydroxide is selected from the group consisting of aluminum, silicon, zirconium, transition metals and the mixture or alloys thereof, for more specific instance, the metal oxide is selected from the group consisting of aluminum oxide, silicon oxide, aluminum-silicon oxide and the mixture thereof, and the metal hydroxide is selected from the group consisting of aluminum hydroxide, silicon hydroxide, aluminum-silicon hydroxide and the mixture thereof, for still more specific instance, the hollow microparticles is hollow microparticles of aluminosilicate.

For another specific instance, the salt in the water soluble metal salt is selected from the group consisting of chloride, carbonate, sulfate and the mixture thereof, and the metal in the water soluble metal salt is an alkali metal or an alkaline earth metal.

Preferably, the microparticles are microparticles of a water soluble sulfate of an alkali metal or an alkaline earth

metal.

Water solubility or solubility in water (it should be remembered that maximum weight of dissolved substance in water at given one temperature and one pressure) is one of basically well-known and constant physics (in particular, available in the "Handbooks of Chemistry and Physic") of the compounds which are organic or inorganic.

The person skilled in the art understands that the microparticles of the water soluble sulfate can dissolve at least partly in water. Preferably, the solubility of the microparticles in water at 0°C under a pressure equal to 1 atm is higher than 1g/100ml, more preferably higher than 2g/100ml, still more preferably higher than 4 g/100ml.

According to a preferred embodiment, the alkali metal or the alkaline metal is selected from the group consisting of sodium (Na), potassium (K), magnesium (Mg), calcium (Ca) and the mixture thereof.

According to a more preferred embodiment, the water soluble sulfate is selected from the group consisting of magnesium sulfate, potassium sulfate and the mixture thereof. Still more preferably, the water soluble sulfate is magnesium sulfate.

According to a more preferred embodiment, the water soluble sulfate is selected from the group consisting of magnesium sulfate, potassium sulfate and the mixture thereof. Still more preferably, the water soluble sulfate is magnesium sulfate.

According to a preferable embodiment, the microparicles have a specific median particle size by volume (D50) and a specific width of a volume particle size distribution (Span), both of which are measured by laser particle size methods in accordance with ISO standard 13320-1 and satisfy the following relations:

- $50\ \mu m < D_{50} < 150\mu m$;
- $0.50 < Span < 1.50$.

The $D_{50}$ is the median particle size (diameter) by volume corresponding to 50 (volume) % of a cumulative distribution obtained from the volume particle size distribution, that is to say, particle size by volume, 50% of the microparticles have smaller diameter(s) than $D_{50}$, and another 50% of the microparticles have larger diameter(s) than $D_{50}$. It is preferred that the $D_{50}$ is between 75 $\mu$m and 125 $\mu$m in order to optimally compromise between a desired surface roughness and a suitable contact between the rubber composition A and the ice.

The Span which is the width of the volume particle size distribution is measured in a way known and is defined according to the following equation:

$$- Span = (D_{90} - D_{10}) / D_{50};$$

Preferably, the Span is between 0.75 and 1.25.

wherein:

$D_{10}$ and $D_{90}$ are diameters (particle sizes) of the microparticles corresponding to 10 (volume) % and to 90 (volume)%, respectively, of the cumulative distribution.

According to a preferred embodiment, the $D_{10}$ is greater than 30 $\mu$m, more preferably greater than 40 $\mu$m, in particular greater than 50 $\mu$m.

According to a preferred embodiment combined or not with the previous embodiment, the $D_{90}$ is less than 180 $\mu$m, more preferably less than 160 $\mu$m, in particular less than 150 $\mu$m.

As another essential feature of the rubber compositions A and B forming the tread of the tire according to the invention, a content noted $C_A$ of the microparticles in the rubber composition A is between 2 and 40 phr, wherein said content $C_A$ is higher than a content noted $C_B$ of the microparticles in the rubber composition B. The difference between $C_A$ and $C_B$ makes it possible to inhibit the crown reinforcement (6) of the tire (1) from rusting.

Moreover, in order to obtain an optimal compromise among the targeted technical effect (the creation of a suitable micro-roughness), the grip performance on melting ice and cost, $C_A$ is preferably between 3 and 30 phr, more preferably between 4 and 20 phr, still more preferably from 5 to 10 phr.

According to a preferred embodiment, $C_B$ is between 0 and 80 weight % (preferably between 10 and 70 weight %, more preferably between 20 and 60 phr, still more preferably from 30 to 50 weight %) of $C_A$.

According to another preferred embodiment, $C_B$ is between 1 and 10 phr, preferably between 1 and 8 phr, more preferably between 1 and 6 phr, still more preferably from 2 to 4 phr.

Each of the rubber compositions A and B forming the tread of the tire according to the invention also comprises all or a portion of the usual additives generally used in the elastomer compositions intended for the manufacture of treads for tires, in particular for winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per

oxide and/or bismaleimides, vulcanization accelerators, or vulcanization activators.

These compositions can also comprise coupling activators when a coupling agent is used, agents for covering the inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyor ganosiloxanes.

Each of the rubber compositions A and B composing the surfacic and the internal portions (8, 9) of the invention is manufactured in appropriate mixers using two successive preparation phases according to a general procedure well known to a person skilled in the art: a first phase of thermomechanical working or kneading (sometimes described as "non-productive" phase) at high temperature, up to a maximum temperature of between 130°C and 200°C, preferably between 145°C and 185°C, followed by a second phase of mechanical working (sometimes described as "productive" phase) at a lower temperature, typically of less than 120°C, for example between 60 °C and 100 °C, finishing phase during which the crosslinking or vulcanization system is incorporated.

A process which can be used for the manufacture of the composition A or the composition B forming the surfacic portion (8) or the internal portion (9) of the treads (2) of the tire (1) according to the invention, for example and preferably, the following steps:

- incorporating in the diene elastomer, in a mixer, the plasticizer, within between the reinforcing filler, the microparticles, everything being kneaded thermomechanically, in one or more goes, until a maximum temperature of between 130°C and 200°C is reached;
- cooling the combined mixture to a temperature of less than 100°C;
- subsequently incorporating a crosslinking system;
- kneading everything up to a maximum temperature of less than 120°C;
- extruding or calendering the rubber composition A or the rubber composition B thus obtained in the form of the surfacic portion (8) or the internal portion (9) or of the tread (2) of the tire (1).

By way of example, the first (non-productive) phase is carried out in a single thermomechanical stage during which all the necessary constituents, the optional additional covering agents or processing aids, and various other additives, with the exception of the crosslinking system, are introduced into an appropriate mixer, such as a normal internal mixer. After cooling the mixture thus obtained during the first non-productive phase, the crosslinking system is then incorporated at low temperature, generally in an external mixer, such as an open mill; everything is then mixed (productive phase) for a few minutes, for example between 5 and 15 min.

The crosslinking system proper is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 3.0 phr, and that of the primary accelerator is preferably between 0.5 and 5.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocarbamates. These accelerators are more preferably selected from the group consisting of 2-mercaptobenzothiazyl disulphide (abbreviated to "MBTS"), N-cyclohexyl-2-benzothiazole-sulphenamide (abbreviated to "CBS"), N,N-dicyclohexyl-2-benzothiazolesulphenamide ("DCB S"), N-tert-butyl-2-benzothiazolesulphenamide ("TBBS"), N-tert-butyl-2-benzothiazolesulphenimide ("TBSI"), zinc dibenzyldithiocarbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can be used directly as a part of a winter tire tread.

The final composition thus obtained is subsequently calendered, for example in the form of a sheet or of a plaque, in particular for laboratory characterization, or else extruded in the form of a rubber profiled element which can be used directly as a part of a winter tire tread.

As for making the tire (1) according to the invention, one can also build a first layer of a homogeneous rubber composition, as the rubber composition A, having a concentration in the microparticles and a second layer of another homogeneous rubber composition, as the rubber composition B, having a lower concentration than the first layer, then superpose the first layer onto the second layer to get a raw tread band, and then build and mold a tire. Preferably, the first layer forming the surfacic portion (8) is located so as to contact the road in the new state of the tire. The second layer forming the internal portion (9) is radially inner located to (and preferably adjacent to) the surfacic portion (8).

The vulcanization (or curing) is carried out in a known way at a temperature generally of between 130°C and

200°C for a sufficient time which can vary, for example, between 5 and 90 min depending in particular on the curing temperature, the vulcanization system adopted and the vulcanization kinetics of the composition under consideration.

The invention relates to the tires described above, both in the raw state (i.e., before curing) and in the cured state (i.e., after crosslinking or vulcanization).

Each of the above aspects or the embodiments including each of the preferred range(s) and/or matter(s) may be applied to any one of the other aspects or the embodiments of the invention.

The invention is further illustrated by the following non-limiting examples.

[Example]

In the following tests, five tires (identified as T-1 (a reference), T-2, T-3 (comparative examples), T-4 and T-5 (examples according to the present invention)) having a tire cross section shown in FIG.1, that is, having treads comprising surfacic and internal portions respectively comprising each of rubber compositions A and B are compared. The compositions A and B are based on diene elastomers, are reinforced with a blend of silica and carbon black, and are combined with/without a fraction (5 or 10 phr in the rubber composition A, 2 or 4 phr in the rubber composition B) of magnesium sulfate microparticles (as microparticles), the microparticles obtained with a suitable filtering as shown in WO 2012/052331 A and having a specific volume distribution defined by $D_{50}$, Span (also $D_{10}$ and $D_{90}$) measured by a laser diffraction method (with"Partica LA-950V2" equipped with its data processing software (P2000074001H version 4.11), provided by HORIBA Co., Ltd.) in accordance with ISO 13320-1.

The formulations of the rubber compositions A and B of the five tires (Table 1 - contents of the various products expressed in phr) are given in Table 1; the vulcanization system is composed of sulphur and sulphenamide. The reinforcing filler (in this example silica as reinforcing inorganic filler, its associated coupling agent, and small amount of carbon black), the plasticizer, each of milliparticles or microparticles, the diene elastomer (or blend of diene elastomers) and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasted in total approximately 3 to 4 minutes, until a maximum "dropping" temperature of 165°C wasreached. The mixture thus obtained was recovered and cooled and then sulphur and an accelerator of sulphenamide type were incorporated on an external mixer (homofinisher) at 30°C, everything being mixed (productive phase) for an appropriate time (for example between 5 and 12 min).

These tires, for radial carcass passenger vehicle winter tires were conventionally manufactured and in all respects identical apart from the rubber compositions A and B forming their surfacic portions and internal portions of treads of the tires. The internal portions are radially inner located to and adjacent to the surfacic portions.

All the tires were fitted to the front and rear wheels of a motor vehicle, under nominal tire inflation pressure, and were first of all subjected to rolling on a circuit about 10,000 km on a dry ground surface in order to expose the microparticles on surfaces of their surfacic portions.

Subsequently, a 1,400 cc passenger car provided on all the four wheels with each set of the tires under 220 kPa of tire inflation pressure mounted onto 6.5Jx16 rim was run on a ice covered road at a temperature of -2°C, the braking distance from 20 to 5 km/h during sudden longitudinal braking was measured while anti-lock braking system (ABS) was activated.

The results of these measurements are reported in Table 2, in relative units, the base 100 being selected for the reference tire T-1 (it should be remembered that a value of greater than 100 indicates an improved performance).

It is noted in this Table 2 that the grip performance (braking on ice) of the tires of the invention (T-4 and T-5) is substantially superior to the reference tire results (T-1), and equivalent to the comparative examples (T-2 and T-5).

Each of the tires was subjected to this endurance test, with a motor vehicle, on tracks covered with gravel, asphalt and/or concrete in the dry state on tracks covered with a thickness of water including salt. The test consisted of running operations of about 1,200 km at about 45 km/h in order to observe how many parts the water detrimentally affected a crown reinforcement forming each tire after the test.

The results of these measurements are reported in Table 2, and an increase with respect to the reference (T-1) arbitrarily set at 100 indicates an improved result, which is say to an aptitude for smaller number of the parts detrimentally affected by the water.

It is noted in this Table 2 that the rust resistance performance of the tires of the invention (T-4 and T-5) is substantially superior to the reference tire results (T-1), and remarkably better than the comparative examples (T-2 and T-3).

[Table 1]

| | Reference | | Comparative examples | | | | Examples | | | |
|---|---|---|---|---|---|---|---|---|---|---|
| Tire | T-1 | | T-2 | | T-3 | | T-4 | | T-5 | |
| Rubber composition | A | B | A | B | A | B | A | B | A | B |
| NR(1) | 55 | 25 | 55 | 25 | 55 | 25 | 55 | 25 | 55 | 25 |
| BR(2) | 45 | 20 | 45 | 20 | 45 | 20 | 45 | 20 | 45 | 20 |
| SBR(3) | | 55 | | 55 | | 55 | | 55 | | 55 |
| Silica (4) | 80 | 35 | 80 | 35 | 80 | 35 | 80 | 35 | 80 | 35 |
| Coupling agent(5) | 6.4 | 2.8 | 6.4 | 2.8 | 6.4 | 2.8 | 6.4 | 2.8 | 6.4 | 2.8 |
| Carbon black (6) | 5 | 40 | 5 | 40 | 5 | 40 | 5 | 40 | 5 | 40 |
| Oil(7) | 40 | 20 | 40 | 20 | 40 | 20 | 40 | 20 | 40 | 20 |
| Hydrocarbon resin (8) | 20 | 8 | 20 | 8 | 20 | 8 | 20 | 8 | 20 | 8 |
| Microparticles (9) | | | 5 | 5 | 10 | 10 | 5 | 2 | 10 | 4 |
| ZnO | 1.2 | 2 | 1.2 | 2 | 1.2 | 2 | 1.2 | 2 | 1.2 | 2 |
| Stearic acid | 1 | 3 | 1 | 3 | 1 | 3 | 1 | 3 | 1 | 3 |
| Antiozone wax | 1.5 | 1.5 | 1.5 | 1.5 | 1.5 | 1.5 | 1.5 | 1.5 | 1.5 | 1.5 |
| Antioxidant (10) | 2 | 2 | 2 | 2 | 2 | 2 | 2 | 2 | 2 | 2 |
| DPG(11) | 2 | 2 | 2 | 2 | 2 | 2 | 2 | 2 | 2 | 2 |
| Sulphur | 2 | 2 | 2 | 2 | 2 | 2 | 2 | 2 | 2 | 2 |
| Accelerator (12) | 3 | 2 | 3 | 2 | 3 | 2 | 3 | 2 | 3 | 2 |

(1) Natural rubber (peptised);
(2) BR with 0.3% of 1,2 vinyl; 2.7% of trans; 97% of cis-1,4 (Tg = -105°C);
(3) SBR1500 (Tg = -48°C);
(4) Silica "Zeosil1165MP" from Rhodia, " (CTAB, BET: about 160 m2/g);
(5) Coupling agent TESPT ("Si69" from Evonik);
(6) ASTM grade N234 (Cabot);
(7) Oleic sunflower oil ("Agripure 80" from Cargill, Weight percent oleic acid: 100%);
(8) Hydrocarbon resin C5/C9 type ("Escorez ECR-373" from Exxon);
(9) Magnesium sulfate (filtering "MG-OK" from Ako Kasei, D10: 52 μm, D50: 84 μm, D90: 140 μm and Span: 1.05 μm measured by laser diffraction methods in accordance with ISO13320-1);
(10) N-(1,3-dimethylbutyl)-N-phenyl-para-phenylenediamine ("Santoflex 6-PPD" from Flexsys);
(11) Diphenylguanidine ("Perkacit DPG" from Flexsys);
(12) N-dicyclohexyl-2-benzothiazolesulphenamide ("Santocure CBS" from Flexsys).

[Table 2]

| | Reference | Comparative examples | | Examples | |
|---|---|---|---|---|---|
| Tire | T-1 | T-2 | T-3 | T-4 | T-5 |
| Braking on ice | 100 | 105 | 110 | 105 | 110 |
| Rust resistance | 100 | 90 | 85 | 110 | 105 |

**Claims**

1. A tire (1) having a crown (2) prolonged by two sidewalls (3), the sidewalls (3) being ended by two beads (4), a carcass reinforcement (5) passing into the crown (2) and the sidewalls (3) and being anchored in the beads (4), the crown (2) being reinforced by a crown reinforcement (6) placed circumferentially between the carcass reinforcement (5) and a tread (7) forming the crown (2), said tread (7) comprising at least two radially superposed portions (8, 9) comprising:

- a surfacic portion (8) intended to come into contact with ground during rolling at least when the tread (7) is new and in the cured state, the surfacic portion (8) being made of a rubber composition A;
- an internal portion (9) radically inner located to the surfacic portion (8), the internal portion (9) being made of a rubber composition B;

wherein each of the rubber compositions A and B comprises at least a diene elastomer, between 50 and 150 phr of a reinforcing filler, between 20 and 160 phr of a plasticizer, and microparticles;
wherein a content noted $C_A$ of the microparticles in the rubber composition A is between 2 and 40 phr, said content $C_A$ being higher than a content noted $C_B$ of the microparticles in the rubber composition B;
wherein the microparticles have a median particle size by volume, which is measured by laser diffraction methods in accordance with ISO standard 13320-1, which satisfy the following relations:

- $50\ \mu m < D50 < 150\ \mu m$;

wherein:

- D50 is the medium particle size by volume corresponding to 50 % of a cumulative distribution obtained from the volume particle size distribution.

**2.** The tire according to Claim 1, wherein $C_B$ is between 0 and 80 weight % of $C_A$.

**3.** The tire according to Claim 1 or Claim 2, wherein $C_B$ is between 1 and 10 phr.

**4.** The tire according to any one of Claims 1 to 3, wherein $C_A$ is between 3 and 30 phr.

**5.** The tire according to any one of Claims 1 to 4, wherein the microparticles have a width of a volume particle size distribution, which is measured by laser diffraction methods in accordance with ISO standard 13320-1, which satisfy the following relations:

- $0.50 < Span < 1.50$;

wherein:

- $Span = (D_{90} - D_{10}) / D_{50}$; and
- $D_{10}$ and $D_{90}$ are the particle size corresponding to 10 volume % and to 90 volume %, respectively, of the cumulative particle distribution.

**6.** The tire according to any one of Claims 1 to 5, wherein the microparticles are microparticles of a water soluble sulfate of an alkali metal or an alkaline earth metal, preferably selected from the group consisting of sodium, potassium, magnesium, calcium and mixtures thereof.

**7.** The tire according to Claim 6, wherein the water soluble sulfate is selected from the group consisting of magnesium sulfate, potassium sulfate and mixtures thereof, preferably magnesium sulfate.

**8.** The tire according to any one of Claims 1 to 5, wherein the microparticles are hollow microparticles of at least one metal oxide or metal hydroxide.

**9.** The tire according to any one of Claims 1 to 8, wherein the diene elastomer in the rubber composition A and the rubber composition B is selected from the group consisting of natural rubber, synthetic polyisoprenes, polybutadienes, butadiene copolymers, isoprene copolymers and the mixtures thereof.

**10.** The tire according to any one of Claims 1 to 9, wherein the reinforcing filler is selected from the group consisting of carbon black, inorganic filler and the mixture thereof.

**11.** The tire according to Claim 10, wherein the inorganic filler is silica.

**12.** The tire according to any one of Claims 1 to 11, wherein the plasticizer is selected from the group consisting of a liquid plasticizer, a hydrocarbon resin and the mixture thereof.

**13.** The tire according to Claim 12, wherein the liquid plasticizer is selected from the group consisting of polyolefinic oils, naphthenic oils, paraffinic oils, Distillate Aromatic Extracts (DAE) oils, Medium Extracted Solvates (MES) oils,

Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oil, mineral oils, vegetable oils, ether plasticizers, ester phosphate plasticizers, sulphonate plasticizers and the mixtures thereof.

**14.** The tire according to Claim 12, wherein the hydrocarbon resin is selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixture thereof.

**15.** The tire according to any one of Claims 1 to 14, wherein the internal portion (9) is adjacent to the surfacic portion (8).

**Patentansprüche**

**1.** Reifen (1) mit einer Krone (2), die von zwei Seitenwänden (3) verlängert ist, wobei die Seitenwände (3) durch zwei Verstärkungsrippen (4) enden, wobei eine Reifenunterbau-Verstärkung (5) in die Krone (2) und die Seitenwände (3) eindringt und in den Verstärkungsrippen (4) verankert ist, wobei die Krone (2) durch eine Kronenverstärkung (6) verstärkt ist, die umfangsgemäß zwischen der Reifenunterbau-Verstärkung (5) und einer die Krone (2) bildenden Lauffläche (7) angeordnet ist, wobei die genannte Lauffläche (7) wenigstens zwei radial überlagerte Abschnitte (8, 9) umfasst, umfassend:

- einen Oberflächenabschnitt (8), der zum Kontaktieren eines Bodens während des Rollens wenigstens, wenn die Lauffläche (7) neu und in vulkanisiertem Zustand ist, wobei der Oberflächenabschnitt (8) aus einer Gummiverbindung A hergestellt ist;
- einen internen Abschnitt (9), der radikal innen zum Oberflächenabschnitt (8) angeordnet ist, wobei der interne Abschnitt (9) aus einer Gummizusammensetzung B hergestellt ist;

wobei die Gummizusammensetzungen A und B wenigstens ein Dien-Elastomer zwischen 50 und 150 phr eines Verstärkungsfüllers zwischen 20 und 160 phr eines Weichmachers und Mikropartikel umfasst;
wobei ein mit $C_A$ bezeichneter Inhalt der Mikropartikel in der Gummizusammensetzung A zwischen 2 und 40 phr beträgt, wobei der genannte Inhalt $C_A$ größer ist als ein mit $C_B$ bezeichneter Inhalt der Mikropartikel in der Gummizusammensetzung B;
wobei die Mikropartikel eine mittlere Volumen-Partikelgröße aufweisen, die nach Laser-Beugungsverfahren gemäß der ISO-Norm 13320-1 gemessen ist, die den folgenden Beziehungen genügt:

- 50 $\mu$m < D50 < 150 $\mu$m;
wobei:

- D50 die mittlere Volumen-Partikelgröße ist, die 50 % einer kumulativen Verteilung entspricht, die von der Verteilung der Volumenpartikel-Größe erhalten ist.

**2.** Reifen gemäß Anspruch 1, wobei $C_B$ zwischen 0 und 80 Gew.- % von $C_A$ beträgt.

**3.** Reifen gemäß Anspruch 1 oder Anspruch 2, wobei $C_B$ zwischen 1 und 10 phr. beträgt.

**4.** Reifen gemäß Anspruch 1 bis 3, wobei $C_A$ zwischen 3 und 30 phr. beträgt.

**5.** Reifen gemäß irgendeinem der Ansprüche 1 bis 4, wobei die Mikropartikel eine Breite einer Verteilung der Volumen-Partikelgröße aufweisen, die nach Laser-Beugungsverfahren gemäß der ISO-Norm 13320-1 gemessen ist, die den folgenden Beziehungen genügt:

- 0.50 < Bereich < 1.50;
wobei:

- Bereich = $(D_{90} - D_{10}) / D_{50}$; und
- $D_{10}$ und $D_{90}$ die Partikelgröße sind, die jeweils 10 Volumen-% bis 90 Volumen-% der kumulativen Partikelverteilung entspricht.

**6.** Reifen gemäß irgendeinem der Ansprüche 1 bis 5, wobei die Mikropartikel mit einem wasserlöslichen Sulfat eines

Alkalimetalls oder eines Alkali-Erdmetalls sind, die bevorzugt aus der Gruppe ausgewählt sind, bestehend aus Natrium, Kalium, Magnesium, Kalzium und Mischungen davon.

**7.** Reifen gemäß Anspruch 6, wobei das wasserlösliche Sulfat aus der Gruppe ausgewählt ist, bestehend aus Magnesiumsulfat, Kaliumsulfat und Mischungen davon, bevorzugt Magnesiumsulfat.

**8.** Reifen gemäß irgendeinem der Ansprüche 1 bis 5, wobei die Mikropartikel hohle Mikropartikel aus wenigstens einem Metalloxid oder Metallhydroxid sind.

**9.** Reifen gemäß irgendeinem der Ansprüche 1 bis 8, wobei das Dien-Elastomer in der Gummizusammensetzung A und der Gummizusammensetzung B aus der Gruppe ausgewählt ist, bestehend aus Naturgummi, synthetischen Polyisoprenen, Polybutadienen, Butadien-Kopolymeren, Isopren-Kopolymeren und den Mischungen davon.

**10.** Reifen gemäß irgendeinem der Ansprüche 1 bis 9, wobei der Verstärkungsfüller aus der Gruppe ausgewählt ist, bestehend aus Kohlenschwarz, anorganischem Füller und der Mischung davon.

**11.** Reifen gemäß Anspruch 10, wobei der anorganische Füller Kieselerde ist.

**12.** Reifen gemäß irgendeinem der Ansprüche 1 bis 11, wobei der Weichmacher aus der Gruppe ausgewählt ist, bestehend aus flüssigem Weichmacher, einem Kohlenwasserstoff-Harz und der Mischung davon.

**13.** Reifen gemäß Anspruch 12, wobei der flüssige Weichmacher ausgewählt ist aus der Gruppe bestehend aus Polyolefinölen, naphtenischen Ölen, Paraffinölen, Aromatenextrakt aus Destillat-Ölen (DAE-Ölen), Mediumextrakten aus Lösungsmittel-Ölen (MES-Ölen), Verarbeiteten Aromatenextrakten aus Destillatölen (TDAE-Ölen), Aromatenextrakten aus Rückstandsölen (RAE-Ölen), Aromatenextrakten aus verarbeiteten Rückstandsölen (TSRAE-Ölen), Aromatenextrakten aus Sicherheitsrückstandsölen (SRAE-Ölen), Mineralölen, Pflanzenölen, Äther-Weichmachern, Esterphosphat-Weichmachern, Sulfonat-Weichmachern und den Mischungen davon.

**14.** Reifen gemäß Anspruch 12, wobei das Kohlenwasserstoff-Harz aus der Gruppe ausgewählt ist, bestehend aus Cyclopentadien-Homopolymer oder Kopolymerharzen, Dicyclopentadien-Homopolymer oder Kopolymerharzen, Terpen-Homopolymer oder Kopolymerharzen, $C_5$ Fraktions-Homopolymer oder Kopolymerharzen, $C_9$ Fraktions-Homopolymer oder Kopolymerharzen, Alpha-Methlystyrol-Homopolymer oder Kopolymerharzen und der Mischung davon.

**15.** Reifen gemäß irgendeinem der Ansprüche 1 bis 14, wobei der interne Abschnitt (9) anliegend an dem Oberflächenabschnitt (8) ist.

## Revendications

**1.** Pneumatique (1) possédant un sommet (2) prolongé par deux flancs (3), les flancs (3) étant terminés par deux talons (4), un renfort de carcasse (5) passant dans le sommet (2) et les flancs (3) et étant ancré dans les talons (4), le sommet (2) étant renforcé par un renfort de sommet (6) placé de manière circonférentielle entre le renfort de carcasse (5) et une bande de roulement (7) formant le sommet (2), ladite bande de roulement (7) comprenant au moins deux parties radialement superposées (8, 9) comprenant :

- une partie surfacique (8) destinée à venir en contact avec le sol durant le roulement au moins lorsque la bande de roulement (7) est neuve et à l'état durci, la partie surfacique (8) étant constituée d'une composition de caoutchouc A ;
- une partie interne (9) radialement intérieure située sur la partie surfacique (8), la partie interne (9) étant constituée d'une composition de caoutchouc B ;

dans lequel chacune des compositions de caoutchouc A et B comprend un élastomère diène, entre 50 et 150 phr d'une charge de renforcement, entre 20 et 160 phr d'un plastifiant, et des microparticules ;
dans lequel une teneur indiquée CA des microparticules dans la composition de caoutchouc A est entre 2 et 40 phr, ladite teneur CA étant plus élevée qu'une teneur indiquée CB des microparticules dans la composition de caoutchouc B ;
dans lequel les microparticules présentent une taille de particule moyenne par volume, qui est mesurée par des

procédés de diffraction laser conformément à la norme ISO 13320-1, qui satisfont les relations suivantes :

- 50 μm < D50 <150 μm ;
dans lequel :

  - D50 est la taille de particule moyenne par volume correspondant à 50 % d'une distribution cumulée obtenue à partir de la distribution de taille de particule par volume.

**2.** Pneu selon la revendication 1, dans lequel CB fait entre 0 et 80 % en poids de CA.

**3.** Pneu selon la revendication 1 ou la revendication 2, dans lequel CB est entre 1 et 10 phr.

**4.** Pneu selon l'une quelconque des revendications 1 à 3, dans lequel CA est entre 3 et 30 phr.

**5.** Pneu selon l'une quelconque des revendications 1 à 4, dans lequel les microparticules présentent une largeur d'une distribution de taille de particule par volume, qui est mesurée par des procédés de diffraction laser conformément à la norme ISO 13320-1, qui satisfont les relations suivantes :

- 0,50 < Span < 1,50 ;
dans lequel :

  - Span = (D90 - D10)/D50 ; et
  - D10 et D90 sont la taille de particule correspondant à 10 % en volume et à 90 % en volume, respectivement, de la distribution de particule cumulée.

**6.** Pneu selon l'une quelconque des revendications 1 à 5, dans lequel les microparticules sont des microparticules d'un sulfate soluble dans l'eau d'un métal alcalin ou d'un métal alcalino-terreux, de préférence sélectionné à partir du groupe constitué du sodium, du potassium, du magnésium, du calcium et de mélanges de ceux-ci.

**7.** Pneu selon la revendication 6, dans lequel le sulfate soluble dans l'eau est sélectionné à partir du groupe constitué du sulfate de magnésium, de sulfate de potassium et de mélanges de ceux-ci, de préférence le sulfate de magnésium.

**8.** Pneu selon l'une quelconque des revendications 1 à 5, dans lequel les microparticules sont des microparticules creuses d'au moins un oxyde métallique ou hydroxyde métallique.

**9.** Pneu selon l'une quelconque des revendications 1 à 8, dans lequel l'élastomère diène dans la composition de caoutchouc A et la composition de caoutchouc B est sélectionné à partir du groupe constitué de caoutchouc naturel, de polyisoprènes synthétiques, de polybutadiènes, de copolymères de butadiène, de copolymères d'isoprène et des mélanges de ceux-ci.

**10.** Pneu selon l'une quelconque des revendications 1 à 9, dans lequel la charge de renforcement est sélectionnée à partir du groupe constitué du noir de carbone, d'une charge inorganique et du mélange de ceux-ci.

**11.** Pneu selon la revendication 10, dans lequel la charge inorganique est la silice.

**12.** Pneu selon l'une quelconque des revendications 1 à 11, dans lequel le plastifiant est sélectionné à partir du groupe constitué d'un plastifiant liquide, d'une résine d'hydrocarbures et du mélange de ceux-ci.

**13.** Pneu selon la revendication 12, dans lequel le plastifiant liquide est sélectionné à partir du groupe constitué d'huiles polyoléfiniques, d'huiles naphténiques, d'huiles paraffiniques, d'huiles d'extraits aromatiques de distillat (DAE), d'huiles de solvates extraits moyens (MES), d'huiles d'extraits aromatiques de distillat traités (TDAE), d'huiles d'extraits aromatiques résiduels (RAE), d'huiles d'extraits aromatiques résiduels traités (TRAE), d'huile d'extraits aromatiques résiduels de sécurité (SRAE), d'huiles minérales, d'huiles végétales, de plastifiants d'éther, de plastifiants de phosphate d'ester, de plastifiants de sulfonate et des mélanges de ceux-ci.

**14.** Pneu selon la revendication 12, dans lequel la résine d'hydrocarbures est sélectionnée à partir du groupe constitué de résines d'homopolymère ou de copolymère de cyclopentadiène, de résines d'homopolymère ou de copolymère de dicyclopentadiène, de résines d'homopolymère ou de copolymère de terpène, de résines d'homopolymère ou

de copolymère de cyclopentadiène de fraction C5, de résines d’homopolymère ou de copolymère de fraction C9, de résines d’homopolymère ou de copolymère de styrène alpha-méthylique et des mélanges de ceux-ci.

**15.** Pneu selon l’une quelconque des revendications 1 à 14, dans lequel la partie interne (9) est adjacente à la partie surfacique (8).

[Fig. 1]

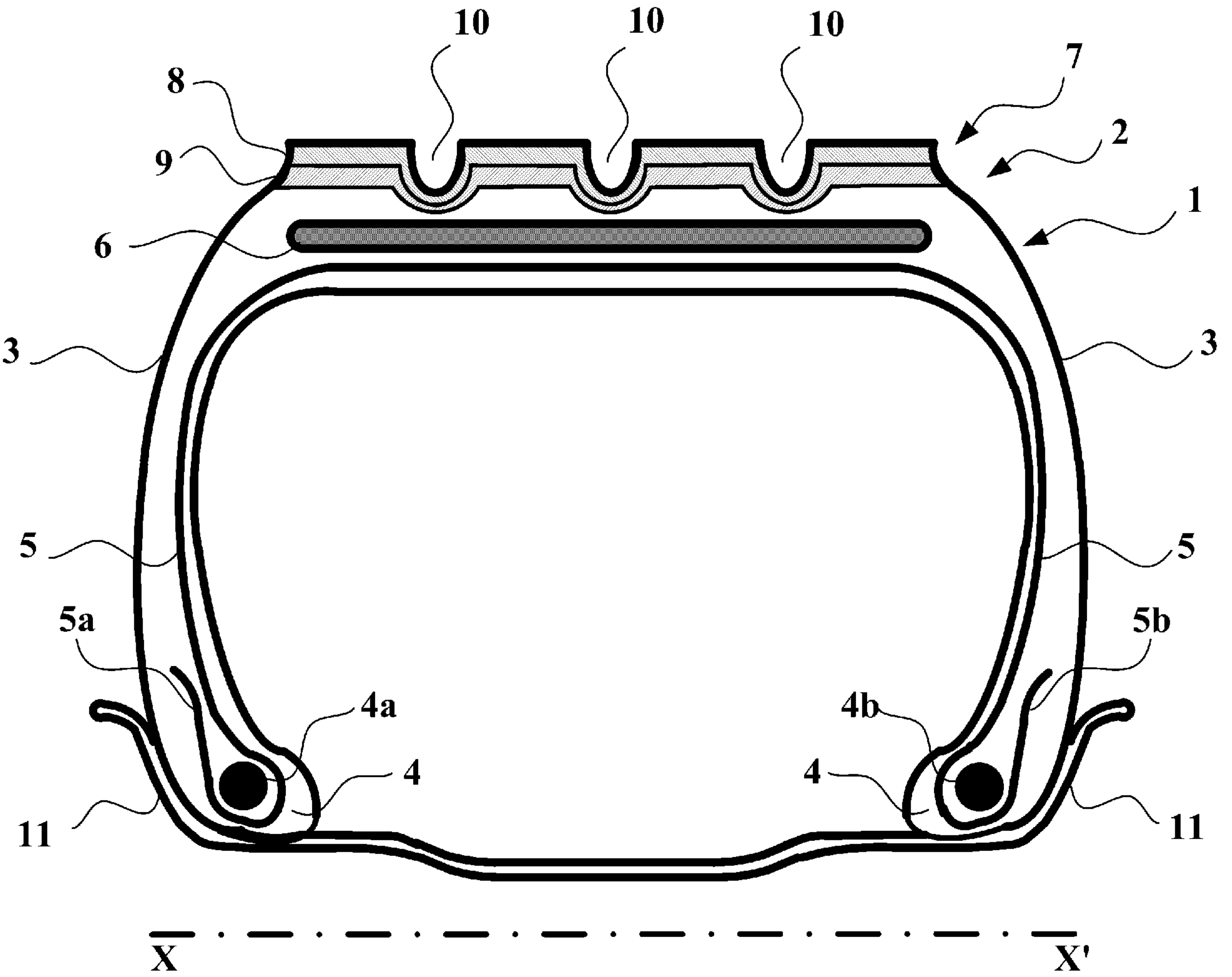

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010009850 A
- WO 2012052331 A
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- WO 02088238 A
- WO 2005087859 A
- WO 2006061064 A
- WO 2007017060 A


### Non-patent literature cited in the description


- **R. MILDENBERG ; M. ZANDER ; G. COLLIN.** Hydrocarbon Resins. VCH, 1997